# EUROPEAN PATENT APPLICATION

(11) **EP 4 495 394 A2**
(43) Date of publication of application: **22.01.2025**
(21) Application number: 24217807.7
(22) Date of filing: 16.05.2020
(51) Int. Cl.: F01K 25/10

(54) **CLOSED CYCLE INVENTORY CONTROL**

(30) Priority: 17.05.2019 US 201962849239 P
(62) Divisional of application: 20726965.5
(71) Applicant: 8 Rivers Capital, LLC, Durham, North Carolina 27701 (US)
(72) Inventor: FETVED, Jeremy Eron, Raleigh, 27612 (US); FORREST, Brock Alan, Durham, 27707 (US)
(74) Representative: Hoeger, Stellrecht & Partner Patentanwälte mbB

(57) **Abstract**

The present disclosure relates to systems and methods that are useful in control of one or more aspects of a power production plant. More particularly, the disclosure relates to power production plants and operation thereof utilizing a closed loop or semi-closed loop working fluid circuit. Inventory control through the working fluid circuit is provided through transfer of working fluid from a storage tank at one or positions between a plurality of compressors based upon at least one conditional input to a controller that is in a working arrangement with the working fluid circuit.

## Description

The present disclosure is a divisional application and relates to the subject matter disclosed in European patent application No. 20 726 965.5 of May 16, 2020 which is incorporated herein by reference in its entirety and for all purposes.

### FIELD OF THE DISCLOSURE

The presently disclosed subject matter relates to systems and methods for controlling the various aspects of a power plant. More particularly, the systems and methods can utilize a variety of signals and functions for mass management in a closed or semi-closed power cycle.

### BACKGROUND

As the world-wide demand for electrical power production increases there is a continuing need for additional power production plants to meet such needs. Closed loop or semi-closed loop power cycles utilizing a carbon dioxide working fluid (or other working fluid) can be advantageous in light of achievable efficiencies and the potential for little to no exhaust of combustion products to the atmosphere. For example, U.S. Patent No. 8,596,075 to Allam et al., the disclosure of which is incorporated herein by reference, provides for desirable efficiencies in oxy-fuel combustion systems utilizing a recycle CO₂ stream wherein the CO₂ is captured as a relatively pure stream at high pressure. Closed loop or semi-closed loop power production cycles, however, can require inventory control to maintain required operating conditions, particularly where a variable heat input is utilized. Such inventory control can include functions, such as mass management and/or pressure management.

Known systems for mass management can include the use of a tank in which fluid can be stored and released. The tank is typically fluidly connected to a flow line on the low pressure side and high pressure side of a pressure increasing element (e.g., a pump or compressor). As such, fluid can be released into the line on the low pressure side and/or can be taken from the line on the high pressure side. As such, the tank is at a pressure that is between the suction pressure and the exhaust pressure of the pressure increasing element. Such systems, however, can be limited in their ability to provide for flexibility of operating parameters, such as when using variable heat input to the system. Accordingly, there is a need for further systems and methods suitable for controlling multiple aspects of power plants, particularly power plants configured for operation with a closed loop or semi-closed loop power production cycle.

### SUMMARY OF THE DISCLOSURE

The present disclosure provides systems and methods for power production wherein one or more control paths are utilized for control of one or more actions. The controls can be based upon a variety of manual or automated inputs, calculated values, pre-set values, measured values, logical functions, computer algorithms, or computer program inputs.

In one or more embodiments, the present disclosure can relate to a power production system. The system can include a variety of elements effective for power production utilizing a closed loop or semi-closed loop working fluid circuit. In some embodiments, such system can comprise: a working fluid circuit through which a working fluid is cycled between a higher pressure and a lower pressure; a power generating turbine fluidly connected to the working fluid circuit so as to receive working fluid at the higher pressure, expand the working fluid, and output the working fluid from an outlet thereof at the lower pressure; a first compression component downstream of the power generating turbine and in fluid connection therewith; a second compression component downstream of the first compression component and in fluid connection therewith; a storage tank in fluid communication with the working fluid circuit; and a controller configured to transfer working fluid between the tank and one or more positions in the working fluid circuit. The system can be further defined in relation to one or more of the following statements that can be combined in any order or number.

The first compression component can be a single stage or multi-stage compressor.

The second compression component can be a variable speed pump.

The power production system further can comprise at least one line configured for passage of working fluid between the storage tank and the working fluid circuit.

The power production system further can comprise at least one valve configured for control of fluid flow through the at least one line configured for passage of working fluid between the storage tank and the working fluid circuit.

The controller can be configured to open and close the at least one valve based upon at least one conditional input received by the controller.

The at least one line configured for passage of working fluid between the storage tank and the working fluid circuit can be configured to remove working fluid from the working fluid circuit upstream from the first compression component and downstream from an outlet of the power generating turbine.

The at least one line configured for passage of working fluid between the storage tank and the working fluid circuit can be configured to remove working fluid from the working fluid circuit downstream from the first compression component and upstream from the second compression component.

The at least one line configured for passage of working fluid between the storage tank and the working fluid circuit can be configured to introduce working fluid to the working fluid circuit downstream from the first compression component and upstream from the second compression component.

The at least one line configured for passage of working fluid between the storage tank and the working fluid circuit can be configured to introduce working fluid to the working fluid circuit downstream from the second compression component and upstream from an inlet of the power generating turbine.

The power production system further can comprise a heater positioned upstream from the power generating turbine and having an outlet in fluid communication with an inlet of the power generating turbine.

The power production system further can comprise a heating/cooling component in a heating/cooling connection with the storage tank and configured for one or both of heating and cooling working fluid that is present in the storage tank.

Further embodiments of the presently described power production systems are evident from the further disclosure provided herein.

In one or more embodiments, the present disclosure can relate to a method for controlling inventory in a power production system utilizing a closed loop or semi-closed loop working fluid circuit. In some embodiments, such method can comprise: expanding a working fluid in a closed loop or semi-closed loop working fluid circuit across a power generating turbine from a higher pressure to a lower pressure; compressing the expanded working fluid in a first compression component; further compressing the working fluid in a second compression component; and transferring working fluid between one or more positions of the closed loop or semi-closed loop working fluid circuit and a storage tank. The method can be further defined in relation to one or more of the following statements that can be combined in any order or number.

Transferring the working fluid between one or more positions of the closed loop or semi-closed loop working fluid circuit and the storage tank can be based upon at least one conditional input to at least one controller in a working arrangement with the working fluid circuit.

The second compression component can be a variable speed pump.

The at least one conditional input to the at least one controller can include one or more of a change in an operating speed of the variable speed pump, a suction pressure measured between the first compression component and the variable speed pump, and a temperature of the working fluid at an outlet of the power generating turbine.

The closed loop or semi-closed loop working fluid circuit can be configured to maintain an operating pressure range between the first compression unit and the second compression unit, said operating pressure range being between a minimum pressure P1 and a maximum pressure P2.

The at least one controller can be configured to cause passage of working fluid from the storage tank to at least one position in the closed loop or semi-closed loop working fluid circuit to maintain pressure above the minimum pressure P1.

The passage of working fluid from the storage tank can be to at least one position in the closed loop or semi-closed loop working fluid circuit that is upstream from the first compression component and downstream from an outlet of the power generating turbine.
passage of working fluid from the storage tank can be to at least one position in the closed loop or semi-closed loop working fluid circuit that is downstream from the first compression component and upstream from the second compression component.

The at least one controller can be configured to cause passage of working fluid to the storage tank from at least one position in the closed loop or semi-closed loop working fluid circuit to maintain pressure below the maximum pressure P2.

The passage of the working to the storage tank can be from at least one position in the closed loop or semi-closed loop working fluid circuit that is downstream from the first compression component and upstream from the second compression component.

The passage of the working to the storage tank can be from at least one position in the closed loop or semi-closed loop working fluid circuit that is downstream from the second compression component and upstream from an inlet of the power generating turbine.

The working fluid can comprise carbon dioxide.

The working fluid can be greater than 50% molar carbon dioxide.

The method further can comprise one or both of heating and cooling working fluid that is in the storage tank.

Further embodiments of the presently described method for controlling inventory in a power production system are evident from the further disclosure provided herein

### BRIEF DESCRIPTION OF THE FIGURE

Reference will now be made to the accompanying drawing, which is not necessarily drawn to scale, and wherein:

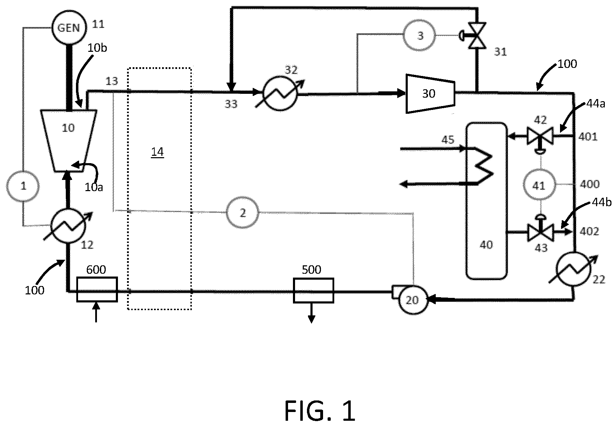

FIG. 1 is a flow diagram for a closed loop power production cycle with inventory control elements according to embodiments of the present disclosure.

### DETAILED DESCRIPTION

The present subject matter will now be described more fully hereinafter with reference to exemplary embodiments thereof. These exemplary embodiments are described so that this disclosure will be thorough and complete, and will fully convey the scope of the subject matter to those skilled in the art. Indeed, the subject matter can be embodied in many different forms and should not be construed as limited to the embodiments set forth herein; rather, these embodiments are provided so that this disclosure will satisfy applicable legal requirements. As used in the specification, and in the appended claims, the singular forms "a", "an", "the", include plural referents unless the context clearly dictates otherwise.

The present disclosure relates to systems and methods adapted for controlling one or more actions in the operation of a power production plant. As such, the present disclosure further relates to power production plants including a variety of elements, including such control systems. Non-limiting examples of elements that may be included in a power production plant according to the present disclosure are described in U.S. Pat. No. 8,596,075, U.S. Pat. No. 8,776,532, U.S. Pat. No. 8,959,887, U.S. Pat. No. 8,986,002, U.S. Pat. No. 9,068,743, U.S. Pat. Pub. No. 2010/0300063, U.S. Pat. Pub. No. 2012/0067054, U.S. Pat. Pub. No. 2012/0237881, and U.S. Pat. Pub. No. 2013/0213049, the disclosures of which are incorporated herein by reference.

In one or more embodiments, the present disclosure relates to power production system and/or method utilizing a close loop or semi-closed loop cycle. In particular, the system and/or method can incorporate elements beneficial for inventory control. In certain embodiments, said elements are configured to improve operations with improved management of mass and/or volume flows at one or more points in the cycle.

A power production system and/or method as discussed herein can exhibit improved inventory controls through utilization of a combination of elements. In some embodiments, it can be useful to utilize two independent stages of compression/pumping of fluid through the cycle. By having two independent stages of compression/pumping, the present cycle is in a beneficial position to allow the pressure between the separate, independent stages to substantially float - i.e., be within a relatively wide range defined by upper and lower boundaries. Multistage compressors/pumps are not known to exhibit such capabilities since the individual stages must be balanced carefully so that one is not in surge white the other are within normal operating parameters. By utilizing a plurality of independent stages of compression/pumping according to the present disclosure, it is possible to allow the pressure in the area between the stages to increase and/or decrease, thereby storing excess inventory and/or providing additional inventory to the cycle without the requirement of the use of added equipment. Further, a storage tank can be added between the stages with simple controls to set a maximum and minimum pressure to allow for far greater changes in cycle operating conditions.

Systems and methods according to the present disclosure thus can incorporate a variety of components operating under suitable conditions. For example, at least a power producing turbine and an associated generator for forming electricity may be combined with a plurality of independent stages of compression/pumping that are separated by piping or lines with sufficient volume to accommodate fluid storage therebetween. This can include one or more storage tanks positioned between the plurality of compression/pumping stages. One or more coolers and/or heaters may be included at one or more points in the system, for example, to remove heat from the expanded working fluid prior to compression, to remove heat or add heat between the compression/pumping stages, and/or to add heat to the working fluid prior to expansion in the turbine. In some embodiments, the power producing turbine may be a combined heater/turbine unit. Alternatively, a combustor or other heating unit may be positioned upstream from the power producing turbine, particularly directly upstream from the power producing turbine.

An example embodiment of the present disclosure is illustrated in FIG. 1, which shows a simplified diagram of a closed loop power production cycle. It is understood, however, that the aspects of the present disclosure likewise may be incorporated, in whole or in part, into closed loop or semi-closed loop power production cycles having more or fewer parts relative to the diagram of FIG. 1. For example, the aspects of the present disclosure may be incorporated into power productions as described in any of the above documents that are incorporated herein by reference. The cycle illustrated in FIG. 1, for example, may be configured as a semi-closed loop power production cycle by introducing a valve 500 as shown in FIG. 1 as an optional component. The valve 500 may allow for withdrawal of a portion of the working fluid. Likewise, a valve 600 may be used for introduction of make-up fluid and/or fuel. The valve 500 and the valve 600 may be positioned in other locations in the illustrated power production cycle.

FIG. 1 thus shows an example embodiment of a power production system including various components. A working fluid circuit 100 can include any necessary piping, lines, valves, splitters, unions, and other components that are typically utilized in a power production system for passage of a heated and/or compressed fluid therethrough. In the working fluid circuit 100, a working fluid is cycled between a higher pressure and a lower pressure. The ranges for the higher pressure and the lower pressure can vary as desired. For example, the lower pressure can be in a range of ambient pressure up to about 5 bar, about 4 bar, about 3 bar, or about 2 bar. The higher pressure can vary in a range of about 10 bar up to about 400 bar, about 15 bar to about 350 bar, or about 20 bar to about 300 bar. It is understood, however, that the terms "higher" and "lower" are meant to be relative one to another, and the higher pressure can be any pressure that is higher than the lower pressure, and the lower pressure can be any pressure that is lower than the higher pressure.

The power generating turbine 10 is fluidly connected to the working fluid circuit 100 so as to receive working fluid at the higher pressure, expand the working fluid, and output the working fluid from an outlet 10b thereof at the lower pressure. The higher pressure working fluid particularly can enter the power producing turbine 10 through an inlet 10a. A first compression component (e.g., compressor 30) is positioned downstream of the power generating turbine 10 and in fluid connection therewith such that working fluid enters the compressor 30 and is compressed to a higher pressure relative to the pressure of the working fluid at the outlet 10b of the turbine 10. The first compression component may be, for example, a single stage compressor or a multi-stage compressor. When a multi-stage compressor is used, it can be beneficial to utilize cooling between compression stages. A second compression component (e.g., pump 20) is positioned downstream of the first compression component and in fluid connection therewith. As further described herein, it can be useful, in some embodiments, for the second compression component to be a pump, such as a variable speed pump. This can be useful to provide for controlled changes to pump speed to account for changes in the working fluid inventory upstream from the pump.

A cooler 32 is positioned between the turbine 10 and the compressor 30, and a cooler 22 is positioned between the compressor 30 and the pump 20. Such coolers may be optional but can be useful for maintaining desired pressures and/or densities of the working fluid at various points in the working fluid circuit 100. As further described below, a storage tank 40 preferably can be included and be positioned so as to be in fluid communication with the working fluid circuit 100. A controller 41 can be configured to transfer working fluid between the tank 40 and one or more positions in the working fluid circuit 100. Such transfer can be automated and may be dependent upon input of one or more signals to the controller 41.

The cycle illustrated in FIG. 1 particularly illustrates the use of a controllable heat source 12 - i.e., a heat source where the input may vary over a relatively wide range. The use of a controllable heat source would typically introduce complexities that may make inventory control otherwise unattainable. The present disclosure, however, can achieve necessary inventory controls when using a controllable heat source or a heat source that provides a fixed heat input. As illustrated, the heat source 12 is a controllable heat source, but is understood that a fixed heat source may be used. Heat source 12, for example, may be a combustor, including a flexible fuel combustor as described in U.S. Pat. App. Pub. No 2018/0259183, the disclosure of which is incorporated herein by reference. Other types of heat sources, such as a solar heater, a boiler, or the like may also be used.

Because of heat source 12 is controllable (or variable), the present disclosure includes control elements to manage the heat entering the system. As illustrated, a controller 1 measures the power output of a generator 11, however, several possible items may be controlled by controller 1. More particularly, controller 1 commands heat input into heat source 12 to generate the required power. If the heat source is not controllable, or otherwise controlled outside of the power loop, controller 1 is optional and not needed and the system will simply extract the maximum amount of power from the heat added in heat source 12. In one or more embodiments, one or more recuperative heat exchangers can be utilized, and recuperative heating can be beneficial under various conditions. If a recuperative heat exchanger is present, it also can be beneficial to include one or more additional heat sources to add heat to the cycle via the recuperative heat exchanger. Similarly, one or more heat exchangers may be used to remove heat from the cycle. This illustrated in FIG. 1 by heat exchanger 14, which is optional, and may be used at least for recuperative heating of the working fluid entering the heater 12 by recuperating heat from the working fluid stream exiting the turbine 10.

As heat is added to the system via heat source 12 (or a further heat source), the temperature at various points of the cycle downstream from the heat source will increase accordingly. For example, the addition of heat in heat source 12 will increase the temperature at an inlet of the turbine 10 and, after expansion through the turbine 10, the temperature at point 13 (after exiting an outlet of the turbine) will likewise change. Controller 2 can be configured to measure the temperature at one or more points in the system and accordingly command the power, or the speed, of pump 20 to change in order to maintain a constant temperature at one or more points. As illustrated in FIG. 1, controller 2 is coupled to the temperature measurement at point 13 so that control of pump 20 can be managed to achieve a constant temperature at point 13. It is understood, however, that controller 2 may be coupled to additional points in the system or to a single, different point in the system. Likewise, additional controllers may be added so that control of pump 20 may be individually coupled to temperature measurements at a plurality of different points in the system. For example, control of pump 20 may be coupled by one or more controllers to temperature measurements at any one or more of the inlet of turbine 10, the outlet of turbine 10 (i.e., point 13), the input for heat source 12, or further points in the system. Moreover, use of controller 2 to manage pump 20 may be implemented as a function of a parameter other than temperature (or in addition to temperature). Generally, any system parameter that is capable of being managed based on the output at pump 20 may be automatically controlled via controller 2 through coupling of the controller to a suitable parameter input site in the system. In this manner, regardless of the parameter being controlled, the controller can be configured to keep the parameter substantially constant and/or can be configured to make automatic adjustments to the parameter as needed. Pump 20 particularly can be a variable speed pump. Thus, the outlet flow and pressure of pump 20 can be variable and can be allowed to change in order to satisfy the inlet requirements of the turbine 10 based on the heat input of the turbine and/or based on the specific parameter that is to be managed by controller 2. For example, as illustrated in FIG. 1, it is possible to maintain fixed turbine outlet conditions at point 13 based on controller 2 managing the operation of pump 20.

Controller 3 controls spill back valve 31, which may also be referred to as a recycle valve. The controller 3 allows flow from the high pressure side of the compressor 30 to return to the suction side at point 33, upstream of cooler 32, so as not to overheat the system. In doing this, controller 3 maintains the suction pressure of the compressor 30 at a controlled value, which is in turn the turbine 10 exhaust pressure at point 13, while taking into account system losses. By fixing the turbine 10 exhaust temperature and pressure, the inlet conditions to the turbine are dictated by the amount of power generated in generator 11, and these inlet conditions will naturally be determined by the fundamental operation of the turbine, the turbine map, and the location of the exhaust on the turbine map as dictated by controllers 2 and 3. Likewise, temperature or a different parameter may be similarly fixed at a different point in the system based upon outputs provided by one or both of controllers 2 and 3.

It can be seen that as the amount of heat entering the system at heat source 12 changes, the flow through the system changes. Since the illustrated power cycle is a closed loop (and therefore has a fixed volume), the inventory in the system may need to change. The "inventory" can reference a variety of different fluids that may be in different states (e.g., gas, liquid, supercritical). The inventory particularly can be a CO₂ containing fluid, preferably a fluid that is a majority CO₂ or is substantially pure CO₂. For example, the inventory (i.e., the working fluid) can comprise more than 50% molar carbon dioxide. Substantially pure CO₂ can mean at least 98%, at least 99%, at least 99.5%, or at least 99.9% molar carbon dioxide.

The power production system further can comprise at least one line configured for passage of working fluid between the storage tank 40 and the working fluid circuit 100. In FIG. 1, line 44a is configured for passage of working fluid from the working fluid circuit 100 to the storage tank 40, and line 44b is configured for passage of working fluid from the storage tank to the working fluid circuit. It is understood, however, that a single line may be utilized or a plurality of input and/or output lines (input and output being relative to the tank) may be utilized. Any input and/or output line(s) may include at least one valve configured for control of fluid flow through the at least one line configured for passage of working fluid between the storage tank 40 and the working fluid circuit 100. In FIG. 1, line 44a includes valve 42, and line 44b includes valve 43. It is understood that the valve(s) may include a pumping component to improve active transfer of fluid to and from the storage tank 40. As further described herein, controller 41 can be configured to open and close the at least one valve (e.g., valve 42 and/or valve 43) based upon at least one conditional input received by the controller.

The inventory control tank 40 is used to store fluid that can be add to and/or removed from the cycle. As pump 20 changes speed and changes flow, the pressure in the system around point 400 will change. In order for the pump 20 to operate efficiently, there is a minimum requirement for the combination of suction pressure at point 400 and the temperature of the stream leaving cooler 22. Controller 41 uses valve 43 to add fluid at point 402 in order to maintain the pressure above a minimum pressure P1, which can be chosen based upon desired operating parameters. Also, as the cycle conditions change, the pressure at point 400 may increase and begin to approach a maximum pressure, P2. The maximum pressure can be chosen to meet any desired operating range. In particular embodiments, P2 may be chosen as a pressure that would cause either damage to the piping and other equipment, or exceed the capabilities of compressor 30. The controller 41 uses valve 42 to remove fluid from the cycle at point 401, and add it to storage tank 40, in order to keep the pressure at point 400 below the maximum pressure, P2. As such, the pressure in tank 40 will be at an intermediate point, between P1 and P2, as will point 400, although the pressures in the tank and at point 400 will be different. In this manner, small changes in operation of the turbine 10 do not impact the mass within the system since the control around the tank 40 and point 400 acts as an accumulator and keeps the mass in the system constant while allowing the pressure in this area to be between P1 and P2. If the change in conditions is significantly large, the pressure at 400 can go above or below the limits of P1 and P2. In such case, controller 41 will react to maintain the pressure within the limits.

The locations of points 400, 401, and 402 relative to each other and to cooler 22 can vary from what is illustrated in FIG. 1. That is, the order is not dictated by how they have been shown. For example, point 401 may optionally be positioned between cooler 32 and compressor 30 so that re-direction of fluid out of the cycle and into the storage tank 40 may be carried out upstream from the compressor 30 instead of downstream from the compressor. As a further example, point 402 may optionally be positioned between pump 20 and heater 12 so the introduction of fluid back into the cycle may be carried out downstream from the pump 20 instead of upstream from the pump. Additionally, it is not a requirement that two valves (42 and 43) must be used, and a single valve may instead be utilized. Still further, the functions of controller 41 may be implemented utilizing a plurality of different controllers. For example, valve 42 and valve 43 may be controlled by a first valve controller and a second, different valve controller, respectively. In addition, it is understood that pump 20 can also be referred to as a compressor since the difference is purely nomenclature and is merely for convenience. In some embodiments, controller 41 may take inputs from one or more of the suction, operating, or exhaust conditions of pump 20 and allow calculation of P2 for equipment protection in order to maintain pump operation within a desired operational range.

Optionally, the temperature in tank 40 can be controlled with a heating/cooling component 45. The heating/cooling component 45 specifically can be in a heating/cooling connection with the storage tank 40 and can be configured for one or both of heating and cooling working fluid that is present in the storage tank. Heating and cooling may be accomplished by the same component, or separate heating and cooling components may be associated with the storage tank 40.

In some embodiments, heating/cooling component 45 may be a fluid stream that can add and/or remove fluid from tank 40 to modify temperature conditions within the tank. Since the volume of the tank 40 is fixed, this would allow for additional fluid to be added to the tank 40 without increasing or decreasing the pressure beyond the P1 and P2 limits by manipulating the density within the tank. Alternatively, in a similar manner, for a given volume of tank 40 with a given mass of fluid, the pressure in tank 40 can be manipulated by changing the density of the fluid and/or by changing the temperature of the fluid such that P1 and P2 can be raised or lowered for non-steady state cases and operation, such as start-up, load following, turn down, etc. Heating/cooling component 45 thus may alternatively be a heater that applies heat to the tank (or directly to the contents of the tank) or may be a cooler that removes heat from the tank (or directly from the contents of the tank). For example, component 45 may be a jacket around the tank 40 configured to heat and/or cool the tank. As another example, component 45 may be a heat exchange line internal to the tank 40 through which a heating and/or cooling fluid may be passed to heat/cool the contents of the tank without direct intermixing with the fluid contained in the tank. Fill point for tank and pressure relief safety devices on tank 40 are not shown.

As can be seen from the foregoing, a power production system as described herein can be particularly useful in carrying out a method for controlling inventory of a working fluid in a power production system utilizing a closed loop or semi-closed loop working fluid circuit. For example, a method can comprise expanding a working fluid in a closed loop or semi-closed loop working fluid circuit across a power generating turbine 10 from a higher pressure to a lower pressure to generate power, such as electricity. The working fluid exiting the power producing turbine 10 can be compressed in a plurality of compression components, such as a first compression component and a second compression component described above. In addition, the method can include transferring working fluid between one or more positions of the closed loop or semi-closed loop working fluid circuit 100 and a storage tank 40.

As described above, transferring the working fluid between one or more positions of the closed loop or semi-closed loop working fluid circuit 100 and the storage tank 40 can be based upon at least one conditional input to at least one controller in a working arrangement with the working fluid circuit. Controller 41 illustrated in FIG. 1 can be particularly be configured for controlling the transferring of working fluid between the working fluid circuit 100 and the storage tank.

As an example, when a variable speed pump (e.g., pump 20 in FIG. 1) is used as the second compression component, the at least one conditional input to the at least one controller can include one or more of a change in an operating speed of the variable speed pump, a suction pressure measured between the first compression component (e.g., compressor 30) and the variable speed pump 20, and a temperature of the working fluid at an outlet 10b of the power generating turbine 10. The controller 41, for example, can receive inputs related to one or all of the foregoing and automatically control passage of working fluid between the storage tank 40 and the working fluid circuit 100. As described above, this can be achieved utilizing a single line between the working fluid circuit 100 and the storage tank 40 wherein suitable valve(s) (and optionally pumping component(s)) can be used to cause flow, as required, from the storage tank to the working fluid circuit or from the working fluid circuit to the storage tank.

In some embodiments, such controllability can be beneficial when the closed loop or semi-closed loop working fluid circuit 100 is configured to maintain an operating pressure range between the first compression unit (e.g., compressor 30) and the second compression unit (e.g., pump 20). As previously noted, such operating pressure range can be defined to be between a minimum pressure P1 and a maximum pressure P2. In one or more embodiments, P1 and P2 will both be a pressure that is no less than the lower pressure and no greater than the higher pressure mentioned herein in reference to the power generating turbine. Specifically, P1 can be greater than or equal to the lower pressure of the working fluid exiting the outlet 10b of the turbine 10 and less than P2. Likewise, P2 can be greater than P1 and less than or equal to the higher pressure of the working fluid entering the inlet 10a of the turbine. The controller 41 can be programmed to carry out one or more functions to maintain the pressure of the working fluid circuit 100 to be within the range of P1 to P2. For example, controller 41 can be configured to cause passage of working fluid from the storage tank 40 to at least one position in the closed loop or semi-closed loop working fluid circuit 100 to maintain pressure above the minimum pressure P1. The passage of working fluid from the storage tank 40 can be to at least one position in the closed loop or semi-closed loop working fluid circuit 100 that is upstream from the first compression component (e.g., compressor 30) and downstream from the outlet 10b of the power generating turbine 10. Alternatively, or additionally, the passage of working fluid from the storage tank 40 can be to at least one position in the closed loop or semi-closed loop working fluid circuit 100 that is downstream from the first compression component (e.g., compressor 30) and upstream from the second compression component (e.g., pump 20). Similarly, controller 41 can be configured to cause passage of working fluid to the storage tank 40 from at least one position in the closed loop or semi-closed loop working fluid circuit 100 to maintain pressure below the maximum pressure P2. For example, the passage of the working to the storage tank 40 can be from at least one position in the closed loop or semi-closed loop working fluid circuit 100 that is downstream from the first compression component (e.g., compressor 30) and upstream from the second compression component (e.g., pump 20). Alternatively, or additionally, passage of the working to the storage tank 40 can be from at least one position in the closed loop or semi-closed loop working fluid circuit that is downstream from the second compression component (e.g., pump 20) and upstream from an inlet 10a of the power generating turbine 10.

In addition to the foregoing, the present method can include one or both of heating and cooling working fluid that is in the storage tank 40. This can be carried out as otherwise described above, utilizing a single heating/cooling component 45 or using a heating component and a separate cooling component.

Many modifications and other embodiments of the presently disclosed subject matter will come to mind to one skilled in the art to which this subject matter pertains having the benefit of the teachings presented in the foregoing descriptions and the associated drawings. Therefore, it is to be understood that the present disclosure is not to be limited to the specific embodiments described herein and that modifications and other embodiments are intended to be included within the scope of the appended claims. Although specific terms are employed herein, they are used in a generic and descriptive sense only and not for purposes of limitation.

In accordance with a first embodiment, it is provided a power production system comprising:
a working fluid circuit through which a working fluid is cycled between a higher pressure and a lower pressure;
a power generating turbine fluidly connected to the working fluid circuit so as to receive working fluid at the higher pressure, expand the working fluid, and output the working fluid from an outlet thereof at the lower pressure;
a first compression component downstream of the power generating turbine and in fluid connection therewith;
a second compression component downstream of the first compression component and in fluid connection therewith;
a storage tank in fluid communication with the working fluid circuit; and
a controller configured to transfer working fluid between the tank and one or more positions in the working fluid circuit.

In accordance with a second embodiment, it is provided the power production system of the first embodiment, wherein the first compression component is a single stage or multi-stage compressor.

In accordance with a third embodiment, it is provided the power production system of the first embodiment, wherein the second compression component is a variable speed pump.

In accordance with a fourth embodiment, it is provided the power production system of the first embodiment, further comprising at least one line configured for passage of working fluid between the storage tank and the working fluid circuit.

In accordance with a fifth embodiment, it is provided the power production system of the fourth embodiment, further comprising at least one valve configured for control of fluid flow through the at least one line configured for passage of working fluid between the storage tank and the working fluid circuit.

In accordance with a sixth embodiment, it is provided the power production system of the fifth embodiment, wherein the controller is configured to open and close the at least one valve based upon at least one conditional input received by the controller.

In accordance with a seventh embodiment, it is provided the power production system of the fourth embodiment, wherein the at least one line configured for passage of working fluid between the storage tank and the working fluid circuit is configured to remove working fluid from the working fluid circuit upstream from the first compression component and downstream from an outlet of the power generating turbine.

In accordance with an eighth embodiment, it is provided the power production system of the fourth embodiment, wherein the at least one line configured for passage of working fluid between the storage tank and the working fluid circuit is configured to remove working fluid from the working fluid circuit downstream from the first compression component and upstream from the second compression component.

In accordance with a ninth embodiment, it is provided the power production system of the fourth embodiment, wherein the at least one line configured for passage of working fluid between the storage tank and the working fluid circuit is configured to introduce working fluid to the working fluid circuit downstream from the first compression component and upstream from the second compression component.

In accordance with a tenth embodiment, it is provided the power production system of the fourth embodiment, wherein the at least one line configured for passage of working fluid between the storage tank and the working fluid circuit is configured to introduce working fluid to the working fluid circuit downstream from the second compression component and upstream from an inlet of the power generating turbine.

In accordance with an eleventh embodiment, it is provided the power production system of the first embodiment, further comprising a heater positioned upstream from the power generating turbine and having an outlet in fluid communication with an inlet of the power generating turbine.

In accordance with a twelfth embodiment, it is provided the power production system of the first embodiment, further comprising a heating/cooling component in a heating/cooling connection with the storage tank and configured for one or both of heating and cooling working fluid that is present in the storage tank.

In accordance with a thirteenth embodiment, it is provided a method for controlling inventory of a working fluid in a power production system utilizing a closed loop or semi-closed loop working fluid circuit, the method comprising:
expanding a working fluid in a closed loop or semi-closed loop working fluid circuit across a power generating turbine from a higher pressure to a lower pressure;
compressing the expanded working fluid in a first compression component;
further compressing the working fluid in a second compression component; and
transferring working fluid between one or more positions of the closed loop or semi-closed loop working fluid circuit and a storage tank.

In accordance with a fourteenth embodiment, it is provided the method of the thirteenth embodiment, wherein transferring the working fluid between one or more positions of the closed loop or semi-closed loop working fluid circuit and the storage tank is based upon at least one conditional input to at least one controller in a working arrangement with the working fluid circuit.

In accordance with a fifteenth embodiment, it is provided the method of the fourteenth embodiment, wherein the second compression component is a variable speed pump.

In accordance with a sixteenth embodiment, it is provided the method of the fifteenth embodiment, wherein the at least one conditional input to the at least one controller includes one or more of a change in an operating speed of the variable speed pump, a suction pressure measured between the first compression component and the variable speed pump, and a temperature of the working fluid at an outlet of the power generating turbine.

In accordance with a seventeenth embodiment, it is provided the method of the fourteenth embodiment, wherein the closed loop or semi-closed loop working fluid circuit is configured to maintain an operating pressure range between the first compression unit and the second compression unit, said operating pressure range being between a minimum pressure P1 and a maximum pressure P2.

In accordance with an eighteenth embodiment, it is provided the method of the seventeenth embodiment, wherein the at least one controller is configured to cause passage of working fluid from the storage tank to at least one position in the closed loop or semi-closed loop working fluid circuit to maintain pressure above the minimum pressure P1.

In accordance with a nineteenth embodiment, it is provided the method of the eighteenth embodiment, wherein passage of working fluid from the storage tank is to at least one position in the closed loop or semi-closed loop working fluid circuit that is upstream from the first compression component and downstream from an outlet of the power generating turbine.

In accordance with a twentieth embodiment, it is provided the method of the eighteenth embodiment, wherein passage of working fluid from the storage tank is to at least one position in the closed loop or semi-closed loop working fluid circuit that is downstream from the first compression component and upstream from the second compression component.

In accordance with a twenty-first embodiment, it is provided the method of the seventeenth embodiment, wherein the at least one controller is configured to cause passage of working fluid to the storage tank from at least one position in the closed loop or semi-closed loop working fluid circuit to maintain pressure below the maximum pressure P2.

In accordance with a twenty-second embodiment, it is provided the method of the twenty-first embodiment, wherein passage of the working to the storage tank is from at least one position in the closed loop or semi-closed loop working fluid circuit that is downstream from the first compression component and upstream from the second compression component.

In accordance with a twenty-third embodiment, it is provided the method of the twenty-first embodiment, wherein passage of the working to the storage tank is from at least one position in the closed loop or semi-closed loop working fluid circuit that is downstream from the second compression component and upstream from an inlet of the power generating turbine.

In accordance with a twenty-fourth embodiment, it is provided the method of the thirteenth embodiment, wherein the working fluid comprises carbon dioxide.

In accordance with a twenty-fifth embodiment, it is provided the of the thirteenth embodiment, wherein the working fluid is greater than 50% molar carbon dioxide.

In accordance with a twenty-sixth embodiment, it is provided the method of the thirteenth embodiment, further comprising one or both of heating and cooling working fluid that is in the storage tank.

## Claims

1. A power production system comprising:
a working fluid circuit through which a working fluid is cycled between a higher pressure and a lower pressure;
a power generating turbine fluidly connected to the working fluid circuit so as to receive working fluid at the higher pressure, expand the working fluid, and output the working fluid from an outlet thereof at the lower pressure;
a plurality of compression components downstream of the power generating turbine and in fluid connection therewith;
a storage tank in fluid communication with the working fluid circuit; and
a controller configured to transfer the working fluid to the storage tank from a first position in the working fluid circuit and to transfer the working fluid from the storage tank to a second position in the working fluid circuit so that the working fluid in the storage tank is at an intermediate pressure that is between the higher pressure and the lower pressure.

2. The power production system of claim 1, further comprising a first line configured to transfer the working fluid to the storage tank from the first position in the working flid circuit and a second line configured to transfer the working fluid from the storage tank to the second position in the working fluid circuit.

3. The power production system of claim 2, further comprising a first valve configured for control of fluid flow through the first line and a second valve configured for control of fluid flow through the second line, optionally wherein the controller is configured to open or close one or both of the first valve and the second valve based upon at least one conditional input received by the controller.

4. The power production system of any one of claims 1 to 3, wherein one of the first position and the second position is arranged in the working fluid circuit where the working fluid is at the higher pressure, and the other of the first position and the second position is arranged in the working fluid circuit where the working fluid is at the lower pressure.

5. The power production system of any one of claims 1 to 4, comprising a first compression component that is a single stage or multi-stage compressor and a second compression component that is a variable speed pump.

6. The power production system of claim 5, wherein the first position in the working fluid circuit is downstream from the first compression component, or wherein the second position in the working fluid circuit is upstream from the second compression component.

7. The power production system of any one of claims 1 to 6, wherein one or both of the following conditions is met:
the system further comprises a heater positioned upstream from the power generating turbine and having an outlet in fluid communication with an inlet of the power generating turbine;
the system further comprises a heating/cooling component in a heating/cooling connection with the storage tank and configured for one or both of heating and cooling working fluid that is present in the storage tank.

8. A method for controlling flow of a working fluid in a power production system, the method comprising:
expanding a working fluid in a working fluid circuit across a power generating turbine from a higher pressure to a lower pressure;
compressing the working fluid from the power generating turbine in a plurality of compression components;
configuring a controller to transfer the working fluid to the storage tank from a first position in the working fluid circuit and to transfer the working fluid from the storage tank to a second position in the working fluid circuit so that the working fluid in the storage tank is maintained at an intermediate pressure that is between the higher pressure and the lower pressure.

9. The method of claim 8, wherein controller is configured to transfer the working fluid to the storage tank and from the storage tank so that a pressure at a third position of the working fluid circuit is maintained below a maximum operating pressure.

10. The method of claim 9, wherein the intermediate pressure of the working fluid in the storage tank is different from the pressure at the third position of the working fluid circuit, or the transfer of the working fluid to the storge tank and from the storage tank is configured to maintain a substantially constant fluid mass in the working fluid circuit.

11. The method of any one of claims 8 to 10, wherein the plurality of compression components includes a first compression component that is a single stage or multi-stage compressor and a second compression component that is a variable speed pump.

12. The method of claim 11, wherein the first position in the working fluid circuit is downstream from the first compression component, or wherein the second position in the working fluid circuit is upstream from the second compression component.

13. The method of any one of claims 8 to 12, wherein the controller is configured to transfer the working fluid to the storage tank and from the storage tank based upon at least one conditional input received by the controller, optionally wherein the at least one conditional input includes one or more of a change in an operating speed of the variable speed pump, a suction pressure measured between the plurality of compression components, and a temperature of the working fluid at an outlet of the power generating turbine.

14. The method of any one of claims 8 to 13, wherein the working fluid comprises carbon dioxide, optionally wherein the working fluid is greater than 50% molar carbon dioxide.

15. The method of any one of claims 8 to 14, further comprising heating or cooling the working fluid that is in the storage tank.

16. The method of claim 15, wherein the heating or cooling comprises adding a heating/cooling fluid stream to the storage tank that mixes with the working fluid in the storage tank, or wherein the heating or cooling is carried out with a storage tank heater.
